# EUROPEAN PATENT APPLICATION

(11) **EP 4 436 104 A1**
(43) Date of publication of application: **25.09.2024**
(21) Application number: 22906201.3
(22) Date of filing: 24.11.2022
(51) Int. Cl.: H04L 9/40

(54) **ACCESS CONTROL METHOD AND RELATED DEVICE THEREOF**

(30) Priority: 17.12.2021 CN 202111554356
(71) Applicant: Huawei Technologies Co., Ltd., Shenzhen, Guangdong 518129 (CN)
(72) Inventor: LIU, Bingyang, Shenzhen, Guangdong 518129 (CN); JIANG, Weiyu, Shenzhen, Guangdong 518129 (CN); CHEN, Bo, Shenzhen, Guangdong 518129 (CN); WANG, Chuang, Shenzhen, Guangdong 518129 (CN); YANG, Fei, Shenzhen, Guangdong 518129 (CN)
(74) Representative: Gill Jennings & Every LLP
(86) International application number: PCT/CN2022/133932
(87) International publication number: WO 2023/109450

(57) **Abstract**

An access control method and a related apparatus are provided. The method includes: A computer device sends a source identifier and a target identifier to a first network device; and the first network device determines, based on the source identifier, the target identifier, and an access control list, an association attribute and a first target constraint item corresponding to the association attribute, determines a first verification code based on the association attribute and the first target constraint item corresponding to the association attribute, and then sends, to the computer device, first indication information that includes at least the first verification code. Then, the computer device determines the association attribute and first target information corresponding to the association attribute, adds, to a packet for accessing a target resource, the association attribute and the first target information corresponding to the association attribute, and sends the packet, where the packet further includes at least the first indication information. In addition, a third network device verifies the packet based on the association attribute and the first target information corresponding to the association attribute in the received packet, and sends or discards the packet based on a verification result. Verifying the packet based on the association attribute and related information of the association attribute reduces operation and maintenance costs of an ACL, and improves network security.

## Description

This application claims priority to Chinese Patent Application No. 202111554356.6, filed with the China National Intellectual Property Administration on December 17, 2021 and entitled "ACCESS CONTROL METHOD AND RELATED APPARATUS", which is incorporated herein by reference in its entirety.

### TECHNICAL FIELD

Embodiments of this application relate to the communication field, and in particular, to an access control method and a related apparatus.

### BACKGROUND

In a network scenario that has a border, for example, an enterprise campus network or a data center network, not only a connection capability for network communication needs to be provided, but also an unauthorized data flow needs to be cut off through access control, to prevent unauthorized access and ensure network security.

A current access control mechanism for the enterprise campus network is usually implemented by deploying an access control list (access control list, ACL) by an aggregation layer switch, a core layer switch, or a firewall. For example, when a terminal device accesses the campus network, the aggregation layer switch, the core layer switch, or the firewall obtains 5-tuple information or other information in a data packet sent by the terminal device, then determines authenticity of the 5-tuple information or the other information based on the deployed ACL, and forwards the data packet when determining that the 5-tuple information or the other information is authentic, or discards the data packet when determining that the 5-tuple information or the other information is inauthentic. This achieves an objective of access control.

However, access control based on the ACL requires manual maintenance of the ACL. For an enterprise campus network, the ACL is excessively complex and has large overheads, and an entry in the ACL needs to be managed, updated, or deleted in real time, resulting in high manual operation and maintenance costs.

### SUMMARY

This application provides an access control method and a related apparatus, and is applied to an internet protocol (internet protocol, IP) network, for example, a network scenario such as an enterprise campus network or a data center network, to reduce operation and maintenance costs of an ACL, and improve network security assurance.

A first aspect of this application provides an access control method, and the method includes the following steps.

A computer device sends a source identifier and a target identifier to a first network device, where the source identifier indicates the computer device, the target identifier indicates a target resource, and the target resource is a resource to be accessed by the computer device.

Then, the computer device receives first indication information sent by the first network device, where the first indication information includes at least a first verification code, and the first verification code is obtained based on at least a first key, an association attribute, and a first target constraint item corresponding to the association attribute. The association attribute is an attribute associated with the source identifier, the first target constraint item is a preset constraint range of information corresponding to the association attribute, and there is at least one association attribute. It may be understood that the information includes face information, password information, fingerprint information, numeric information, device information, voice information, or the like, or may be other recordable information. This is not specifically limited herein.

The computer device obtains the association attribute and determines first target information corresponding to the association attribute, where the first target information is information corresponding to the association attribute when the computer device accesses the target resource.

Then, the computer device sends a packet for accessing the target resource, where the packet includes at least the first indication information, the association attribute, and the first target information corresponding to the association attribute, and there is at least one association attribute.

In an implementation of this application, the computer device sends the source identifier and the target identifier to the first network device, and then receives the first indication information that includes the first verification code and that is sent by the first network device. The computer device obtains the association attribute and the first target information corresponding to the association attribute, and then the computer device sends the packet for accessing the target resource, where the packet includes the first indication information, the association attribute, and the first target information corresponding to the association attribute. The first indication information, the association attribute, and the first target information corresponding to the association attribute that are in the packet sent by the computer device may be used to verify the packet, and the target resource can be accessed only after packet verification succeeds. In this solution, application of an ACL is reduced, and therefore operation and maintenance costs of the ACL are reduced. In addition, the association attribute and the first target information corresponding to the association attribute are in real time, so that verifying the packet based on this can improve network security assurance.

In a possible implementation of the first aspect, the first indication information further includes the association attribute, and the computer device obtains the association attribute from the first indication information.

In this implementation of this application, the computer device obtains the association attribute from the first indication information that includes the association attribute. This can improve work efficiency and ensure that the association attribute is consistent with the association attribute determined in the first network device.

In a possible implementation of the first aspect, the computer device obtains the association attribute from a second network device. The second network device may be another network device that has an access control policy or the association attribute corresponding to the computer device, for example, a server or a controller, where the access control list may be used to determine the association attribute. It may be understood that the second network device may alternatively be another network device that can obtain the association attribute. This is not specifically limited herein.

In this implementation of this application, the computer device obtains the association attribute from the second network device. This can reduce a data amount of the first indication information, and save a network resource.

In a possible implementation of the first aspect, the computer device obtains the association attribute from second indication information, where the second indication information is information that includes the association attribute and that is of the computer device. For example, the second indication information may be preset information or a preset entry that includes the association attribute corresponding to the computer device.

In this implementation of this application, the computer device obtains the association attribute from the second indication information of the computer device. This can improve work efficiency, and save a network resource.

In a possible implementation of the first aspect, the computer device further receives a second key sent by the first network device, where the second key is obtained by the first network device based on the first indication information.

Then, the computer device determines a second verification code based on the second key and the packet, and the computer device sends the second verification code. The packet is the packet for accessing the target resource by the computer.

In this implementation of this application, the computer device receives the second key sent by the first network device, obtains the second verification code based on the second key and the packet, and sends the second verification code. The second verification code is used to verify the packet, and the computer device can access the target resource only after the packet verification succeeds. A measure for verifying the packet is added. This improves network security assurance to a greater extent, and prevents, as much as possible, a resource from being stolen maliciously.

In a possible implementation of the first aspect, the first indication information further includes the first target constraint item corresponding to the association attribute and/or a validity period, the validity period is a validity period of the first verification code, and only a packet in a range of the validity period can be used to access the target resource after the verification succeeds. In addition, the first target constraint item is used to verify the packet.

In this implementation of this application, the first indication information may further include the first target constraint item corresponding to the association attribute and/or the validity period, and only the packet in the range of the validity period can be used to access the target resource after the verification succeeds. A measure for verifying the packet is further added. This improves network security reliability, and prevents, as much as possible, a resource from being stolen maliciously.

In a possible implementation of the first aspect, the association attribute includes at least any one of the following:
a login mode, behavior abnormality, access relationship abnormality, terminal health, traffic abnormality, a device security level, location information, security group information, or access time. It may be understood that another dynamic feature that can be used to identify the computer device may also be the association attribute. This is not specifically limited herein.

In this implementation of this application, the association attribute includes at least any one of the login mode, the behavior abnormality, the access relationship abnormality, the terminal health, the traffic abnormality, the device security level, the location information, the security group information, or the access time. This improves flexibility and an application scenario of this solution.

In a possible implementation of the first aspect, the source identifier includes at least any one of the following:
an IP address of the computer device, a device identifier of the computer device, a user identity corresponding to the computer device, a corresponding user group to which the computer device belongs or a source port number corresponding to the computer device, and another identifier that can identify the computer device.

In this implementation of this application, the source identifier includes at least any one of the IP address of the computer device, the device identifier of the computer device, the user identity corresponding to the computer device, the corresponding user group to which the computer device belongs or the source port number corresponding to the computer device, and the another identifier that can identify the computer device. This improves the flexibility of this solution.

In a possible implementation of the first aspect, the target identifier includes at least any one of the following:
an IP address of the target resource, an IP address prefix of the target resource, a part or all of uniform resource locator (uniform resource locator, URL) prefixes of the target resource, a device identifier of the target resource, an identity of the target resource, and a corresponding security group to which the target resource belongs or a port number of the target resource.

In this implementation of this application, the target identifier includes at least any one of the IP address of the target resource, the IP address prefix of the target resource, the part or all of URL prefixes of the target resource, the device identifier of the target resource, the identity of the target resource, and the corresponding security group to which the target resource belongs or the port number of the target resource. This improves reliability of this solution.

In a possible implementation of the first aspect, the computer device obtains a target attribute and third target information corresponding to the target attribute, where the target attribute is an attribute corresponding to the target identifier, and the third target information is preset information that is corresponding to the target attribute and that is obtained by the computer device.

The computer device sends the target attribute and the third target information corresponding to the target attribute.

In this implementation of this application, the computer device obtains and sends the target attribute and the third target information corresponding to the target attribute, so that the packet can be verified based on the target attribute and the third target information corresponding to the target attribute. This prevents a resource from being stolen to a greater extent, improves network security, and improves flexibility and selectivity of this solution.

A second aspect of this application provides an access control method, and the method includes the following steps.

A first network device receives a source identifier and a target identifier that are sent by a computer device, where the source identifier indicates the computer device, the target identifier indicates a target resource, and the target resource is a resource to be accessed by the computer device.

Then, the first network device determines, based on the received source identifier and the received target identifier according to an access control policy, an association attribute and a first target constraint item corresponding to the association attribute, where the access control policy includes a condition for the computer device to access the target resource, the association attribute is an attribute associated with the source identifier, the first target constraint item is a preset constraint range of information corresponding to the association attribute, and there is at least one association attribute. It may be understood that the information includes face information, password information, fingerprint information, numeric information, device information, voice information, or the like, or may be other recordable information. This is not specifically limited herein.

The first network device determines a first verification code based on at least a first key, the association attribute, and the first target constraint item corresponding to the association attribute.

Then, the first network device sends first indication information to the computer device, to enable the computer device to send, based on the first indication information, a packet for accessing the target resource, where the first indication information includes at least the first verification code.

In an implementation of this application, the first network device receives the source identifier and the target identifier that are sent by the computer device, determines, based on the source identifier, the target identifier, and an access control list, the association attribute and the first target constraint item corresponding to the association attribute, and then determines the first verification code based on at least the first key, the association attribute, and the first target constraint item corresponding to the association attribute. Then, the first network device sends, to the computer device, first indication information that includes at least the first verification code, to enable the computer device to send, based on the first indication information that includes the first verification code, the packet for accessing the target resource. Therefore, in a process of forwarding the packet for accessing the target resource by the computer device, the packet may be verified in real time based on the first verification code, to monitor a status of the computer device, and the computer device can access the target resource only after the packet verification succeeds. This improves real-time assurance of network security, and prevents, as much as possible, a resource from being stolen, and application of an ACL is reduced in a packet verification process, so that operation and maintenance costs of the ACL are reduced.

In a possible implementation of the second aspect, the first network device first determines an association attribute entry based on the source identifier and the target identifier according to the access control policy, where the association attribute entry is an entry that includes at least the association attribute and the first target constraint item corresponding to the association attribute.

Then, the first network device determines, based on the association attribute list, the association attribute and the first target constraint item corresponding to the association attribute.

In this implementation of this application, the first network device first determines the association attribute list based on the source identifier, the target identifier, and the access control list, and then determines, from the association attribute list, the association attribute and the first target constraint item corresponding to the association attribute. The association attribute list includes the association attribute and the first target constraint item corresponding to the association attribute, so that management of the association attribute and the first target constraint item corresponding to the association attribute is more convenient and effective, thereby reducing operation and maintenance costs.

In a possible implementation of the second aspect, the first network device can further determine a second key based on the first indication information.

Then, the first network device sends the second key to the computer device, to enable the computer device to generate a second verification code based on the second key. The second verification code is used to verify the packet for accessing the target resource by the computer device.

In this implementation of this application, the first network device obtains the second key based on the first indication information, and then sends the second key to the computer device, and the computer device obtains the second verification code based on the second key. The second key is obtained based on the first indication information, and security is high. Therefore, verifying the packet based on the second verification code generated based on the second key can improve network security assurance to a greater extent, and prevent the target resource from being obtained maliciously from the computer device.

In a possible implementation of the second aspect, the first network device determines the first verification code based on the source identifier and/or the target identifier and/or a validity period, the first key, the association attribute, and the first target constraint item corresponding to the association attribute, where the validity period is a validity period of the first verification code. In addition, the validity period may be preset in the access control policy, preset on the first network device, or preset on another network device that records access related information. This is not specifically limited herein.

In this implementation of this application, the first network device determines the first verification code based on the source identifier and/or the target identifier and/or the validity period, the first key, the association attribute, and the first target constraint item corresponding to the association attribute. The first verification code is determined based on more factors. This improves flexibility and selectivity of this solution, and improves the network security assurance.

In a possible implementation of the second aspect, the first indication information further includes at least any one of the following information:
the validity period, the association attribute, or the first target constraint item corresponding to the association attribute.

In this implementation of this application, the first indication information further includes at least the validity period, the association attribute, or the first target constraint item corresponding to the association attribute. This increases an application scenario of this solution, and reflects selectivity of this solution.

In a possible implementation of the second aspect, when the first indication information does not include the first target constraint item corresponding to the association attribute, the first network device sends, to a third network device, the first target constraint item corresponding to the association attribute, to enable the third network device to verify, based on the first target constraint item, the packet for accessing the target resource by the computer device.

Specifically, after receiving the packet for accessing the target resource by the computer device, the third network device may obtain the second verification code based on the first target constraint item and information carried in the packet. The packet verification succeeds when the second verification code is the same as the first verification code carried in the packet, and then the computer device can access the target resource.

In this implementation of this application, the first network device sends the first target constraint item to the third network device. This improves selectivity of the method.

In a possible implementation of the second aspect, the first network device sends, to the third network device or a fourth network device, the association attribute and second target information corresponding to the association attribute, to enable the third network device or the fourth network device to verify, based on the association attribute and the second target information corresponding to the association attribute, the packet for accessing the target resource by the computer device. The second target information is preset information corresponding to the association attribute. It may be understood that the information includes face information, password information, fingerprint information, numeric information, device information, voice information, or the like, or may be other recordable information. This is not specifically limited herein.

Specifically, after the third network device or the fourth network device receives the packet for accessing the target resource by the computer device, when first target information of the association attribute is consistent with the second target information corresponding to the association attribute in a source attribute mapping table, it is determined that the first target information of the association attribute in the packet is authentic and valid information, and then verification is performed on the packet based on this.

In this implementation of this application, the first network device sends, to the third network device or the fourth network device, the association attribute and the second target information corresponding to the association attribute, and the third network device or the fourth network device verifies, based on the association attribute and the second target information corresponding to the association attribute, authenticity of the first target information corresponding to the association attribute in the packet. The packet is verified again when the first target information corresponding to the association attribute is determined to be authentic. This can improve work efficiency, save a network resource, and reduce costs.

In a possible implementation of the second aspect, the association attribute includes at least any one of the following:
a login mode, behavior abnormality, access relationship abnormality, terminal health, traffic abnormality, a device security level, location information, security group information, or access time. It may be understood that another dynamic feature that can be used to identify the computer device may also be the association attribute. This is not specifically limited herein.

In a possible implementation of the second aspect, the source identifier includes at least any one of the following:
an IP address of the computer device, a device identifier of the computer device, a user identity corresponding to the computer device, a corresponding user group to which the computer device belongs or a source port number corresponding to the computer device, and another identifier that can identify the computer device.

In a possible implementation of the second aspect, the target identifier includes at least any one of the following:
an IP address of the target resource, an IP address prefix of the target resource, a part or all of uniform resource locator URL prefixes of the target resource, a device identifier of the target resource, an identity of the target resource, and a corresponding security group to which the target resource belongs or a port number of the target resource.

A third aspect of this application provides an access control method, and the method includes the following steps.

A third network device receives a packet for accessing a target resource by a computer device, where the packet includes at least first indication information, an association attribute, and first target information corresponding to the association attribute. The target resource is a resource to be accessed by the computer device, the first indication information includes at least a first target verification code, the association attribute is an attribute associated with a source identifier, the first target information is information corresponding to the association attribute when the computer device accesses the target resource, and the source identifier is included in the packet.

Then, the third network device obtains a first target constraint item corresponding to the association attribute, where the first target constraint item is a preset constraint range of information corresponding to the association attribute.

When the first target information corresponding to the association attribute belongs to the first target constraint item corresponding to the association attribute, the third network device determines a second target verification code based on at least a first key, the association attribute, and the first target constraint item corresponding to the association attribute.

The third network device sends the packet when the first target verification code is the same as the second target verification code, so that the computer device accesses the target resource.

In this implementation of this application, the third network device receives the packet for accessing the target resource by the computer device, and obtains the first target constraint item corresponding to the association attribute. When the first target information corresponding to the association attribute belongs to the first target constraint item corresponding to the association attribute, the third network device determines the second target verification code based on at least the first key, the association attribute, and a second target constraint item corresponding to the association attribute, and the third network device sends the packet when the first target verification code is the same as the second target verification code, so that the computer device accesses the target resource. The third network device mainly verifies the packet based on the association attribute in the packet and the first target information corresponding to the association attribute. The computer device can access the target resource only when the obtained second target verification code is the same as the first target verification code. This avoids verifying the packet based on an ACL, and reduces operation and maintenance costs of the ACL, and a status of the computer device can be monitored in real time. In addition, the second target verification code is obtained based on the first key. This can improve network security assurance, and prevent a resource from being stolen maliciously as much as possible.

In a possible implementation of the third aspect, the third network device discards the packet when the first target information corresponding to the association attribute does not belong to the first target constraint item corresponding to the association attribute; and/or the third network device discards the packet when the first target verification code is different from the second target verification code.

In this implementation of this application, the third network device discards the packet when the first target information corresponding to the association attribute does not belong to the first target constraint item corresponding to the association attribute, and/or the third network device discards the packet when the first target verification code is different from the second target verification code, to prevent the computer device from accessing the target resource, prevent a resource from being stolen maliciously, and save a network resource.

In a possible implementation of the third aspect, the first target verification code includes a first verification code, and the first verification code is obtained based on at least the first key, the association attribute, and the first target constraint item corresponding to the association attribute.

In an implementation of this application, the first target verification code may be the first verification code obtained by the computer device from a first network device, and is obtained based on at least the first key, the association attribute, and the first target constraint item corresponding to the association attribute. The third network device reverifies the first verification code determined by the first network device, to improve the network security assurance to a greater extent.

In a possible implementation of the third aspect, the third network device determines the second target verification code based on the source identifier and/or a target identifier and/or a validity period, the first key, the association attribute, and the first target constraint item corresponding to the association attribute, where the target identifier is included in the packet, and the validity period is a validity period of the first target verification code.

In an implementation of this application, the third network device may determine the second target verification code based on the source identifier and/or the target identifier and/or the validity period, the first key, the association attribute, and the first target constraint item corresponding to the association attribute. This improves flexibility and selectivity of a solution, and the second target verification code is determined based on a plurality of factors, to improve the network security assurance.

In a possible implementation of the third aspect, when the first indication information further includes the first target constraint item corresponding to the association attribute, the third network device obtains, from the first indication information, the first target constraint item corresponding to the association attribute;
or the third network device directly obtains, from the first network device, the first target constraint item corresponding to the association attribute.

In this implementation of this application, when the first indication information further includes the first target constraint item corresponding to the association attribute, the third network device obtains, from the first indication information, the first target constraint item corresponding to the association attribute; or the third network device directly obtains, from the first network device, the first target constraint item corresponding to the association attribute. A multi-scenario application is provided, and the selectivity of the solution is reflected.

In a possible implementation of the third aspect, the first indication information further includes the validity period, the validity period is the validity period of the first target verification code, and the third network device determines, based on the validity period, that the first target verification code is valid. When the first target verification code is valid, the packet is verified based on the first target verification code, or after packet verification succeeds, the packet is sent when the first target verification code is valid. This can ensure immediacy and validity of the packet. In addition, when determining, based on the validity period, that the first target verification code is invalid, the third network device discards the packet.

In this implementation of this application, the third network device determines, based on the validity period, that the first target verification code is valid, and then verifies the packet based on the first target verification code, or after the packet verification succeeds, sends the packet when the first target verification code is valid. This can ensure the immediacy and validity of the packet. In addition, the third network device discards the packet when determining, based on the validity period, that the first target verification code is invalid. This can save the network resource and ensure that the resource is not stolen maliciously.

In a possible implementation of the third aspect, the packet further includes a second verification code, and then the third network device determines a third verification code based on the first indication information and the packet. Specifically, the third network device obtains a new key based on the first indication information, and then obtains the third verification code based on the new key and the packet.

Then, the third network device sends the packet when the first target verification code is the same as the second target verification code, and the second verification code is the same as the third verification code.

In this implementation of this application, when the received packet includes the second verification code, the third network device further obtains the third verification code based on the first indication information and the packet. In addition, the third network device sends the packet when the first target verification code is the same as the second target verification code, and the second verification code is the same as the third verification code. The third network device verifies the packet based on the second verification code, and a measure for verifying the packet is added, to reduce a possibility that the target resource is stolen maliciously. In addition, because the third verification code is generated based on the new key, the packet can be prevented from accessing the target resource based on the second verification code generated through tampering to a greater extent, to ensure network security.

In a possible implementation of the third aspect, before the third network device sends the packet, the third network device obtains the association attribute and second target information corresponding to the association attribute, where the second target information is preset information corresponding to the association attribute. Specifically, the third network device may obtain, from the first network device, the association attribute and the second target information corresponding to the association attribute, or may obtain, from another network device that has the association attribute and the second target information corresponding to the association attribute, the association attribute and the second target information corresponding to the association attribute. This is not specifically limited herein. It may be understood that the information includes face information, password information, fingerprint information, numeric information, device information, voice information, or the like, or may be other recordable information. This is not specifically limited herein.

When the first target information corresponding to the association attribute is consistent with the second target information corresponding to the association attribute, the third network device determines that the first target information corresponding to the association attribute is valid. Specifically, when the first target information is valid, the third network device then performs a verification measure on the packet. In addition, when the first target information is invalid, to be specific, the first target information corresponding to the association attribute is inconsistent with the second target information corresponding to the association attribute, the third network device discards the packet.

In this implementation of this application, the third network device obtains the association attribute and the second target information corresponding to the association attribute, and when the second target information corresponding to the association attribute is consistent with the first target information corresponding to the association attribute, the third network device determines that the first target information corresponding to the association attribute is valid. When the first target of the association attribute is valid, the verification measure is then performed on the packet based on the first target information corresponding to the association attribute. This reduces a waste of the network resource, and improves work efficiency.

In a possible implementation of the third aspect, the association attribute includes at least any one of the following:
a login mode, behavior abnormality, access relationship abnormality, terminal health, traffic abnormality, a device security level, location information, security group information, or access time. It may be understood that another dynamic feature that can be used to identify the computer device may also be the association attribute. This is not specifically limited herein.

In a possible implementation of the third aspect, the source identifier includes at least any one of the following:
an IP address of the computer device, a device identifier of the computer device, a user identity corresponding to the computer device, a corresponding user group to which the computer device belongs or a source port number corresponding to the computer device, and another identifier that can identify the computer device.

In a possible implementation of the third aspect, the target identifier includes at least any one of the following:
an IP address of the target resource, an IP address prefix of the target resource, a part or all of URL prefixes of the target resource, a device identifier of the target resource, an identity of the target resource, and a corresponding security group to which the target resource belongs or a port number of the target resource.

A fourth aspect of this application provides an access control method, and the method includes the following steps.

A fourth network device receives a packet for accessing a target resource by a computer device, where the packet includes at least first indication information, an association attribute, and first target information corresponding to the association attribute. The target resource is a resource to be accessed by the computer device, the first indication information includes at least a first verification code, and the first verification code is determined by a first network device based on a source identifier, a target identifier, the association attribute, and a first target constraint item corresponding to the association attribute. The source identifier indicates the computer device, the target identifier indicates the target resource, the association attribute is an attribute associated with the source identifier, the first target information is information corresponding to the association attribute when the computer device accesses the target resource, and the first target constraint item is a preset constraint range of information corresponding to the association attribute.

The fourth network device obtains the association attribute and second target information corresponding to the association attribute, where the second target information is preset information corresponding to the association attribute. Specifically, the fourth network device obtains, from the first network device, the association attribute and the second target information corresponding to the association attribute, or may obtain, from another network device that has the association attribute and the second target information corresponding to the association attribute, the association attribute and the second target information corresponding to the association attribute. This is not specifically limited herein.

The fourth network device sends the packet when the first target information corresponding to the association attribute is consistent with the second target information corresponding to the association attribute, and then the third network device that receives the packet verifies the packet based on the first target information corresponding to the association attribute.

In this implementation of this application, the fourth network device receives the packet for accessing the target resource by the computer device, and then obtains the second target information corresponding to the association attribute. The fourth network device sends the packet when the first target information corresponding to the association attribute is consistent with the second target information corresponding to the association attribute, to enable a network device that receives the packet to verify the packet based on the first target information corresponding to the association attribute. This can improve overall working efficiency, and reduce occupation of the network resource.

A fifth aspect of this application provides a computer device. The computer device has a function of implementing the method in any one of the first aspect or the possible implementations of the first aspect. The function may be implemented by using hardware, or may be implemented by executing corresponding software by hardware. The hardware or software includes one or more modules corresponding to the foregoing functions.

The computer device according to the fifth aspect of this application performs the method described in any one of the first aspect or the possible implementations of the first aspect of this application.

A sixth aspect of this application provides a network device. The network device has a function of implementing the method in any one of the second aspect or the possible implementations of the second aspect. The function may be implemented by using hardware, or may be implemented by executing corresponding software by hardware. The hardware or software includes one or more modules corresponding to the foregoing functions.

The network device according to the sixth aspect of this application performs the method described in any one of the second aspect or the possible implementations of the second aspect of this application.

A seventh aspect of this application provides a network device. The network device has a function of implementing the method in any one of the third aspect or the possible implementations of the third aspect. The function may be implemented by using hardware, or may be implemented by executing corresponding software by hardware. The hardware or software includes one or more modules corresponding to the foregoing functions.

The network device according to the seventh aspect of this application performs the method described in any one of the third aspect or the possible implementations of the third aspect of this application.

An eighth aspect of this application provides a network device. The network device has a function of implementing the method in the fourth aspect. The function may be implemented by using hardware, or may be implemented by executing corresponding software by hardware. The hardware or software includes one or more modules corresponding to the foregoing functions.

The network device according to the eighth aspect of this application performs the method described in the fourth aspect of this application.

A ninth aspect of this application provides a communication apparatus, where the communication apparatus may include a processor, the processor is coupled to a memory, and the memory is configured to store instructions. The processor is configured to execute the instructions in the memory, to enable the communication apparatus to perform the method in any one of the first aspect, the possible implementations of the first aspect, the second aspect, the possible implementations of the second aspect, the third aspect, the possible implementations of the third aspect, or the fourth aspect of this application.

A tenth aspect in embodiments of this application provides another communication apparatus, where the communication apparatus includes a processor, and the processor is configured to execute a computer program (or computer-executable instructions) stored in a memory. When the computer program (or the computer-executable instructions) is executed, the communication apparatus is enabled to perform the method in any one of the first aspect, the possible implementations of the first aspect, the second aspect, the possible implementations of the second aspect, the third aspect, the possible implementations of the third aspect, or the fourth aspect.

In a possible implementation, the processor and the memory are integrated together.

In another possible implementation, the memory is located outside the communication apparatus.

The communication apparatus further includes a communication interface, and the communication interface is used by the communication apparatus to communicate with another device, for example, to send or receive data and/or a signal. For example, the communication interface may be a transceiver, a circuit, a bus, a module, or another type of communication interface.

An eleventh aspect of this application provides a computer-readable storage medium, where the computer-readable storage medium includes computer-readable instructions. When the computer-readable instructions are run on a computer, the method described in any one of the first aspect, the possible implementations of the first aspect, the second aspect, the possible implementations of the second aspect, the third aspect, the possible implementations of the third aspect, or the fourth aspect of this application is performed.

A twelfth aspect of this application provides a computer program product, where the computer program product includes computer-readable instructions. When the computer-readable instructions are run on a computer, the method described in any one of the first aspect, the possible implementations of the first aspect, the second aspect, the possible implementations of the second aspect, the third aspect, the possible implementations of the third aspect, or the fourth aspect of this application is performed.

A thirteenth aspect of this application provides a chip, where the chip includes at least one processor and at least one interface circuit, the interface circuit is coupled to the processor, the at least one interface circuit is configured to: perform a transceiver function, and send instructions to the at least one processor, and the at least one processor is configured to run a computer program or the instructions, and has a function of implementing the method in any one of the first aspect, the possible implementations of the first aspect, the second aspect, the possible implementations of the second aspect, the third aspect, the possible implementations of the third aspect, or the fourth aspect. The function may be implemented by using hardware, may be implemented by using software, or may be implemented by using a combination of hardware and software, and the hardware or software includes one or more modules corresponding to the foregoing functions.

A fourteenth aspect of this application provides a communication system, where the communication system includes the communication apparatus provided in the fifth aspect, the sixth aspect, the seventh aspect, and various possible implementations of the foregoing aspects.

### BRIEF DESCRIPTION OF DRAWINGS

FIG. 1a is a diagram of an architecture of a communication system according to an embodiment of this application;
FIG. 1b is a diagram of an application scenario according to an embodiment of this application;
FIG. 2 is a diagram of an access control method according to an embodiment of this application;
FIG. 3 is a diagram of an association attribute list according to an embodiment of this application;
FIG. 4 is a diagram of determining a first verification code according to an embodiment of this application;
FIG. 5 is another diagram of determining a first verification code according to an embodiment of this application;
FIG. 6 is a diagram of first indication information according to an embodiment of this application;
FIG. 7 is another diagram of determining a first verification code according to an embodiment of this application;
FIG. 8 is a diagram of a packet according to an embodiment of this application;
FIG. 9 is another diagram of a packet according to an embodiment of this application;
FIG. 10 is another diagram of an application scenario according to an embodiment of this application;
FIG. 11 is a diagram of a structure of a computer device according to an embodiment of this application;
FIG. 12 is a diagram of a structure of a network device according to an embodiment of this application;
FIG. 13 is another diagram of a structure of a network device according to an embodiment of this application; and
FIG. 14 is a diagram of a structure of a communication apparatus according to an embodiment of this application.

### DESCRIPTION OF EMBODIMENTS

This application provides an access control method and a related apparatus, and is applied to an IP network, for example, a network scenario such as an enterprise campus network or a data center network, to reduce operation and maintenance costs of an ACL, and improve network security assurance.

In the specification, claims, and accompanying drawings of this application, the terms such as "first" and "second" are intended to distinguish between similar objects but do not necessarily indicate a specific order or sequence. It should be understood that the terms used in such a way may be interchanged in a proper case, and this is merely a distinguishing manner for describing objects with a same attribute in embodiments of this application. In addition, the terms such as "include" and "have" and any other variants are intended to cover a non-exclusive inclusion, so that a process, method, system, product, or device that includes a series of units is not necessarily limited to those units, but may include other units that are not expressly listed or that are inherent to the process, method, system, product, or device.

Before embodiments of this application are described, a common access control method based on the ACL is briefly described first, to facilitate subsequent understanding of embodiments of this application.

In the current network scenario that has a border, for example, the enterprise campus network or the data center network, a packet for accessing a target resource by a computer device is usually verified by an aggregation layer network device or a core layer network device in which the ACL is deployed. However, an entry in the ACL is frequently updated, the updating is timeconsuming, and manual maintenance is specifically required. Therefore, for an enterprise campus network, the ACL is complex and has large overheads, and the entry in the ACL need to be managed, updated, or deleted in real time, resulting in high operation and maintenance costs.

To resolve the foregoing problem, embodiments of this application provide an access control method and a related device. Embodiments of this application are applied to an IP network, for example, a network scenario such as an enterprise campus network or a data center network, and are used to verify, based on an association attribute of a computer device and information corresponding to the association attribute, a packet for accessing a target resource by the computer device, to reduce operation and maintenance costs of an ACL, and improve network security assurance.

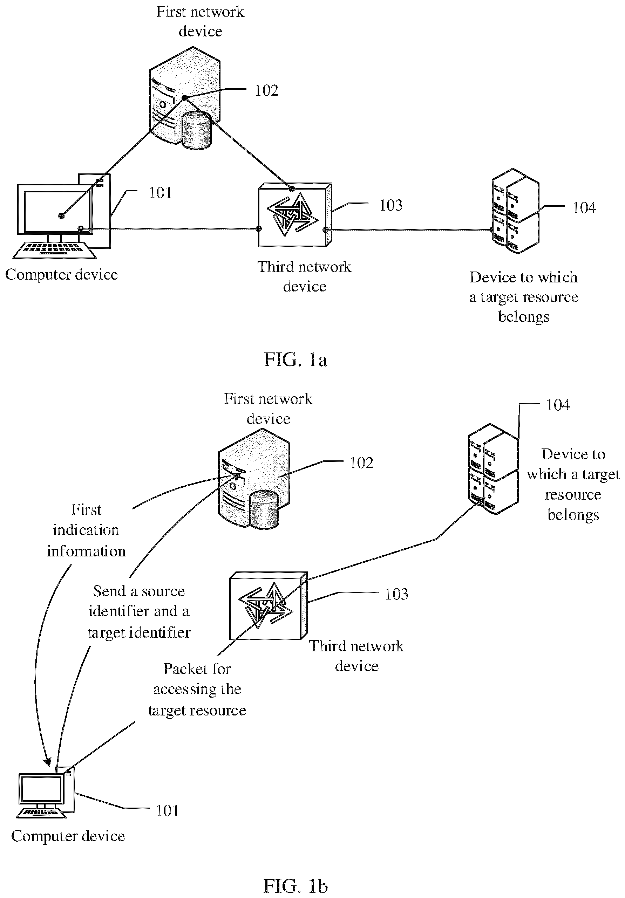

The following describes, with reference to the accompanying drawings, a communication system to which embodiments of this application are applied. A person of ordinary skill in the art may learn that, with development of technologies and emergence of a new scenario, the technical solutions provided in embodiments of this application are also applicable to a similar technical problem. For details, refer to FIG. 1a. FIG. 1a is a diagram of an architecture of a communication system according to an embodiment of this application. The communication system specifically includes:
a computer device 101, a first network device 102, a third network device 103, and optionally, a device 104 to which a target resource belongs.

Based on the communication system, for a specific application of the communication system, refer to FIG. 1b. FIG. 1b is a diagram of the application scenario according to an embodiment of this application. The computer device 101 sends a source identifier and a target identifier to the first network device 102; and the first network device 102 determines, based on the source identifier and the target identifier according to an access control policy, an association attribute and a first target constraint item corresponding to the association attribute, and the first network device 102 determines a first verification code based on at least a first key, the association attribute, and the first target constraint item corresponding to the association attribute. Then, the computer device 101 receives first indication information that includes at least the first verification code and that is sent by the first network device, the computer device 101 determines the association attribute and first target information corresponding to the association attribute, and then the computer device 101 sends a packet for accessing the target resource, where the packet includes at least the first indication information, the association attribute, and the first target information corresponding to the association attribute.

It should be noted that the source identifier indicates the computer device 101, the target identifier indicates the target resource, the target resource is a resource to be accessed by the computer device, and the access control policy includes a condition for the computer device to access the target resource. The association attribute is an attribute associated with the source identifier, the first target constraint item is a preset constraint range of information corresponding to the association attribute, and there is at least one association attribute.

Then, the third network device 103 receives the packet for accessing the target resource by the computer device 101, where the packet includes at least the first indication information, the association attribute, and the first target constraint item corresponding to the association attribute, and the first indication information includes at least a first target verification code. Then, the third network device 103 obtains the first target constraint item corresponding to the association attribute, and the third network device 103 discards the packet when the first target information corresponding to the association attribute does not belong to the first target constraint item corresponding to the association attribute; or the third network device 103 determines a second target verification code based on at least the first key, the association attribute, and the first target constraint item corresponding to the association attribute when the first target information corresponding to the association attribute belongs to the first target constraint item corresponding to the association attribute. In addition, the third network device 103 sends the packet when the second target verification code is the same as the first target verification code. In this way, the computer device 101 can normally access the target resource from the device 104 to which the target resource belongs.

It should be noted that the first target verification code in the packet received by the third network device may be the first verification code determined by the first network device 102, or may be a forged verification code for stealing the target resource. This is not specifically limited herein.

Optionally, the computer device 101 may be a terminal device with a communication function, for example, an internet of things (internet of things, IoT) device (for example, a sensor, an electricity meter, or a water meter), a vehicle to everything (vehicle to everything, V2X) device, a station (station, ST) in a wireless local area network (wireless local area network, WLAN), a personal digital assistant (personal digital assistant, PDA) device, a handheld device (such as a mobile phone) with a wireless communication function, a computing device or another processing device connected to a wireless modem, a vehicle-mounted device, a wearable device (which may also be referred to as a wearable intelligent device), a tablet computer, or a computer with a wireless transceiver function.

Optionally, the first network device 102 and the device 104 to which the target resource belongs may each be a network device such as an application server, a controller, or a personal computer. The third network device 103 may be a gateway device (for example, a network device with a packet forwarding capability such as a router, a switch, a firewall, or a hub) or a network device such as the application server.

It should be noted that the communication system described in embodiments of this application is intended to describe the technical solutions in embodiments of this application more clearly, and does not constitute a limitation on the technical solutions provided in embodiments of this application. A person of ordinary skill in the art may learn that, with evolution of a network architecture and emergence of a new service scenario, the technical solutions provided in embodiments of this application are also applicable to a similar technical problem.

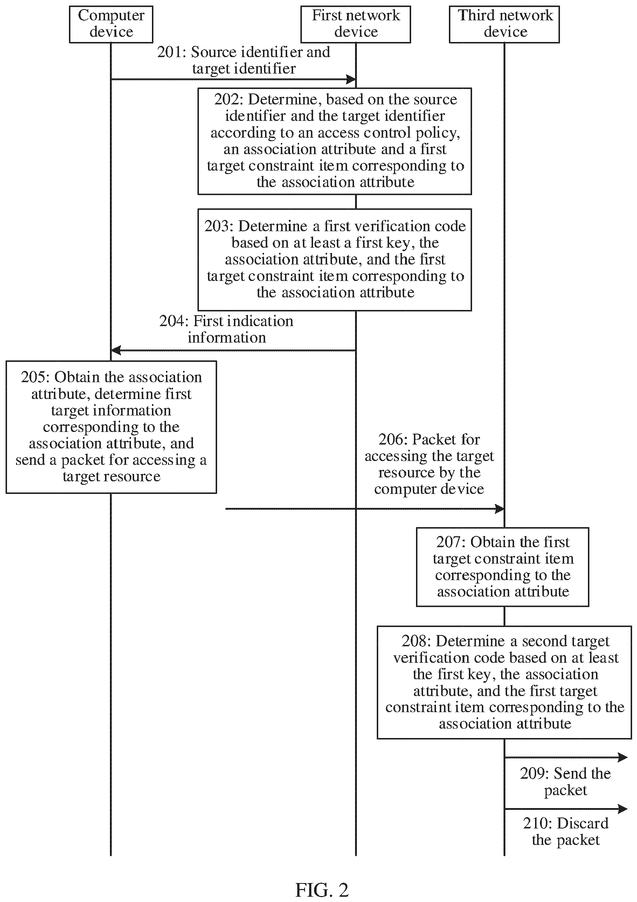

The following describes the access control method in embodiments of this application more intuitively with reference to the accompanying drawings. A person of ordinary skill in the art may learn that, with development of technologies and emergence of a new scenario, the technical solutions provided in embodiments of this application are also applicable to a similar technical problem. For details, refer to FIG. 2. FIG. 2 is a diagram of an access control method according to an embodiment of this application. The method specifically includes the following steps.

201: A computer device sends a source identifier and a target identifier to a first network device.

The computer device sends the source identifier and the target identifier to the first network device. The source identifier indicates the computer device, the target identifier indicates a target resource, and the target resource is a resource to be accessed by the computer device.

Optionally, the source identifier includes at least any one of an IP address of the computer device, a device identifier of the computer device, a user identity corresponding to the computer device, and a corresponding user group to which the computer device belongs or a source port number corresponding to the computer device. It may be understood that, in an actual situation, the source identifier may alternatively be any other identifier that can indicate or represent the computer device. This is not specifically limited herein.

Optionally, the target identifier includes at least any one of an IP address of the target resource, an IP address prefix of the target resource, a part or all of URL prefixes of the target resource, a device identifier of the target resource, an identity of the target resource, and a corresponding security group to which the target resource belongs or a port number of the target resource. It may be understood that, in an actual situation, the target identifier may alternatively be any other identifier that represents or identifies the target resource. This is not specifically limited herein.

In addition, optionally, before step 201, the computer device may establish a secure trusted channel with the first network device in manners such as a transport layer security (transport layer security, TLS) protocol and out-of-band configuration, and then send the source identifier and the target identifier through the secure trusted channel, to prevent the source identifier and the target identifier from being tampered with or disclosed.

202: The first network device determines, based on the source identifier and the target identifier according to an access control policy, an association attribute and a first target constraint item corresponding to the association attribute.

After the first network device receives the source identifier and the target identifier that are sent by the computer device, the first network device determines, based on the source identifier and the target identifier according to the access control policy, the association attribute and the first target constraint item corresponding to the association attribute. The association attribute is an attribute associated with the source identifier, and the first target constraint item is a preset constraint range of information corresponding to the association attribute.

Specifically, the first network device may determine, according to the access control policy by using the received source identifier and the received target identifier as a query condition, the association attribute corresponding to the source identifier, and there is at least one association attribute. Optionally, the association attribute includes at least any one of a login mode, behavior abnormality, access relationship abnormality, terminal health, traffic abnormality, a device security level, location information, security group information, access time, or the like. In addition, optionally, the association attribute may be identified by using a name of the association attribute, or the association attribute may be identified by using a preset letter, value, Chinese character, Chinese character combination, character string, or the like. This is not specifically limited herein.

Then, the first network device can determine, based on the association attribute, the first target constraint item corresponding to the association attribute. For example, the association attribute and the first target constraint item corresponding to the association attribute may be represented in a form of a key-value pair, and the first target constraint item corresponding to the association attribute may be determined by using the key-value pair. The first target constraint item is the preset constraint range of the information corresponding to the association attribute. Optionally, information in the first target constraint item includes face information, password information, fingerprint information, numeric information, a letter or a letter combination, a character string, device information, voice information, or the like, or may be other recordable information, for example, a letter or a letter combination. This is not specifically limited herein. Optionally, the first target constraint item may be specifically a combination of the information (for example, [fingerprint information, face information]), may be an interval range (for example, [2-4]) between the information, or may be a word (for example, good) or a word combination. It may be understood that the first target constraint item may be set based on an actual situation. This is not specifically limited herein.

A specific example of representing the association attribute and the first target constraint item corresponding to the association attribute in the form of the key-value pair is as follows: (login mode, [fingerprint information, face information]), (behavior abnormality, [2-3]), (access relationship abnormality, [2-4]), (terminal health, good), or (traffic abnormality, [0]). It should be noted that content included in the first target constraint item may be a plurality of pieces of information, or may be a single piece of information. This is not specifically limited herein.

It may be understood that the key-value pair is used as an example to describe the association attribute and the first target constraint item corresponding to the association attribute in this embodiment of this application. This is merely an example, and does not constitute a substantial limitation on embodiments of this application. In an actual situation, another implementation that can achieve a same effect is also applicable to this application. This is not specifically limited herein.

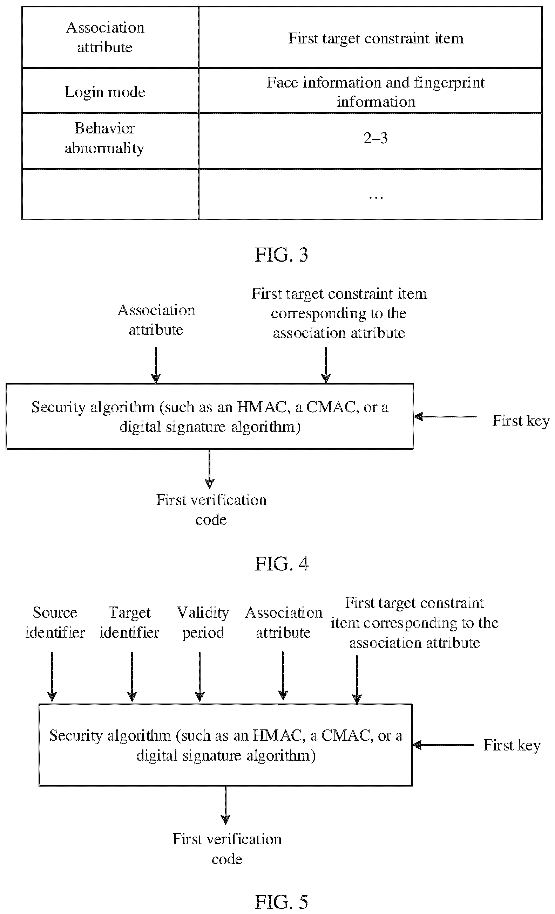

In a possible implementation, the first network device determines an association attribute entry based on the source identifier and the target identifier according to the access control policy, where the association attribute entry is an entry that includes at least the association attribute and the first target constraint item corresponding to the association attribute. Then, the first network device determines, based on the association entry, the association attribute and the first target constraint item corresponding to the association attribute. For another form of the association attribute list, refer to FIG. 3. FIG. 3 is a diagram of an association attribute list according to an embodiment of this application. The association attribute list includes the association attribute and the first target constraint item corresponding to the association attribute. It may be understood that FIG. 3 is merely used as an example to facilitate understanding of embodiments of this application, and does not constitute a substantial limitation on embodiments of this application. In an actual situation, the association attribute list may be further represented in another form. This is not specifically limited herein.

In an implementation of this application, the first network device determines the association attribute list based on the source identifier and the target identifier according to the access control policy, and then determines the association attribute and the first target constraint item corresponding to the association attribute, so that the association attribute and the first target constraint item corresponding to the association attribute can be conveniently and effectively managed, thereby reducing operation and maintenance costs.

It should be noted that the access control policy includes a condition for the computer device to access the target resource, and a specific implementation form is, for example, an ACL, a user access permission list (user control list, UCL), or an attribute policy list (attribute policy list, APL). It may be understood that, the access control policy may be in another implementation form. This is not specifically limited herein.

203: The first network device determines a first verification code based on at least a first key, the association attribute, and the first target constraint item corresponding to the association attribute.

The first network device determines the first verification code based on at least the first key, the association attribute, and the first target constraint item corresponding to the association attribute.

For example, for ease of understanding, FIG. 4 is a diagram of determining the first verification code according to an embodiment of this application. The first network device obtains the first verification code by using the first key, the association attribute, and the first target constraint item corresponding to the association attribute as input of a security algorithm. Optionally, the security algorithm may be a hash-based message authentication code algorithm (hash-based message authentication code algorithm, HMAC), a symmetric cipher-based message authentication code algorithm (cipher-based message authentication code algorithm, CMAC), or a digital signature algorithm. It may be understood that, in an actual situation, the security algorithm may be another algorithm that can achieve a same effect. This is not specifically limited herein.

It should be noted that, when the first verification code is determined, optionally, the first key may be a symmetric key, or may be an asymmetric public-private key pair. It may be understood that the first key may be determined based on the actual situation. This is not specifically limited herein.

In a possible implementation, the first network device determines the first verification code based on the source identifier and/or the target identifier and/or a validity period, the first key, the association attribute, and the first target constraint item corresponding to the association attribute. The validity period is a validity period of the first verification code. Optionally, the validity period may be preset in the access control policy, preset on the first network device, or preset on another network device that records access-related information. It may be understood that, in an actual situation, selection may be performed based on the actual situation. This is not specifically limited herein.

For details, refer to FIG. 5. FIG. 5 is another diagram of determining the first verification code according to an embodiment of this application. Specific content is similar to that shown in FIG. 4, and details are not described herein again.

In an implementation of this application, the first network device determines the first verification code based on the source identifier and/or the target identifier and/or a validity period, the first key, the association attribute, and the first target constraint item corresponding to the association attribute. The first verification code is determined based on more factors. This improves flexibility of this solution. In addition, the validity period limits the first verification code in terms of time limit, to prevent access to the target resource in a non-validity period, and improve network security assurance.

204: The first network device sends first indication information to the computer device.

The first network device sends the first indication information to the computer device. The first indication information includes at least the first verification code.

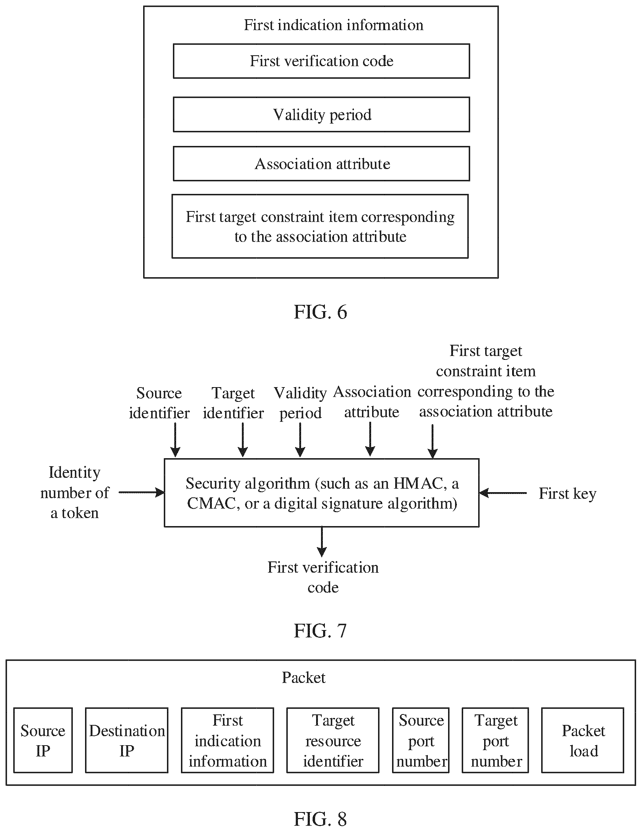

In addition, optionally, the first indication information may further include the validity period, the association attribute, or the first target constraint item corresponding to the association attribute. For example, for specific content included in the first indication information, refer to FIG. 6. FIG. 6 is a diagram of the first indication information according to an embodiment of this application.

For example, when the source identifier and the target identifier that are received by the first network device are included in a token request sent by the computer device, the first network device may send the first indication information to the computer device in a form of a token, and the first indication information still participates in a subsequent operation in the form of the token.

In a possible implementation, when the first indication information is sent in the form of the token, when the first verification code is determined in step 203, an identity number of the token can be further used as the input of the security algorithm, to ensure singleness of the first verification code. This prevents the first verification code from being stolen or tampered with, and improves network security. For details, refer to FIG. 7. FIG. 7 is another diagram of determining the first verification code according to an embodiment of this application. Specific content is similar to that in FIG. 5, and details are not described herein again.

It may be understood that, that the first indication information is the token is merely used as an example to provide a specific application manner for ease of understanding of embodiments of this application. In an actual situation, the first indication information may alternatively be sent in another form, or the first indication information may be directly sent to the computer device. This is not specifically limited herein.

In a possible implementation, the first network device determines a second key based on the first indication information, and then the first network device further sends the second key to the computer device. The computer device can generate a second verification code based on the second key, where the second verification code is used to verify a packet for accessing the target resource by the computer device.

For example, the first network device obtains the second key by using a third key and the first indication information as input of a key derivation function. Optionally, the third key may be the same as the foregoing first key, or may be a randomly generated key. Specifically, the third key is similar to the foregoing first key. Details are not described herein again. It may be understood that, in an actual situation, the third key may be specifically determined based on the actual situation. This is not specifically limited herein.

In an implementation of this application, the first network device obtains the second key based on the first indication information, and sends the second key to the computer device, to enable the computer device to generate the second verification code, where the second verification code is used to verify the packet for accessing the target resource by the computer device. This improves network security assurance to a greater extent. In addition, the second key is obtained based on the first indication information, so that security is higher, and tampering or forging can be prevented to a greater extent.

205: The computer device obtains the association attribute, determines first target information corresponding to the association attribute, and sends the packet for accessing the target resource.

The computer device obtains the association attribute, and then determines the first target information corresponding to the association attribute, where the first target information is information corresponding to the association attribute when the computer device accesses the target resource. Then, the computer device sends the packet for accessing the target resource, where the packet includes at least the first indication information, the association attribute, and the first target information corresponding to the association attribute. There is at least one association attribute. For example, for specific content of the packet, refer to FIG. 8. FIG. 8 is a diagram of a packet according to an embodiment of this application.

It should be noted that the first target information corresponding to the association attribute may be the face information, the password information, the fingerprint information, the numeric information, letter information or information about a letter combination, information about a combination of a numeric and a letter, character string information, the device information, the voice information, or the like, or may be other recordable information. This is not specifically limited herein.

In addition, for example, the association attribute and the first target information corresponding to the association attribute in the packet may be represented in the form of the key-value pair. For example, the association attribute is the login mode, the first target information corresponding to the login mode is collected face information, and the association attribute and the first target information are represented by using the key-value pair as (login mode, face information). It may be understood that the key-value pair is merely used as an example herein to facilitate understanding of embodiments of this application, and does not constitute a substantial limitation on this application. Another manner that can achieve a same effect or objective may also be used. This is not specifically limited herein.

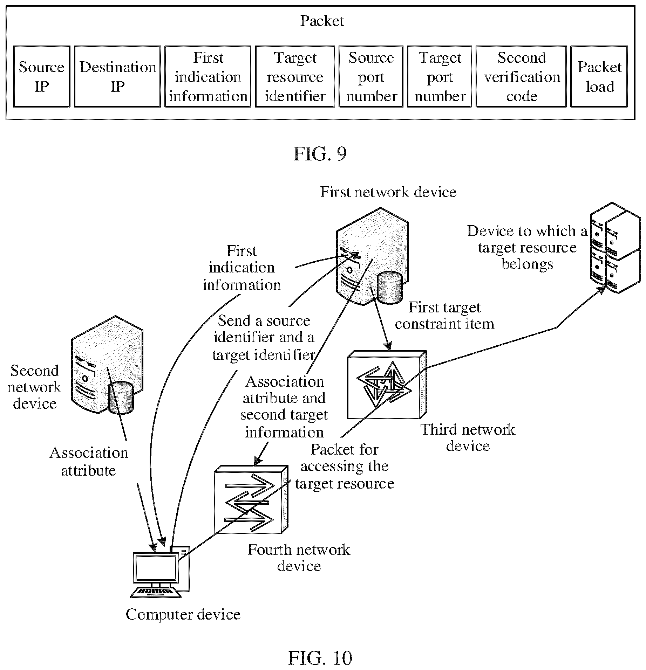

In a possible implementation, the computer device receives the second key sent by the first network device, the computer device determines the second verification code based on the second key and the packet, and then the computer device sends the second verification code. For example, the computer device determines the second verification code based on the second key and all or a part of fixed information in the packet. For example, the computer device determines the second verification code based on the second key and load information in the packet, or information such as the load information and the source identifier, or the source identifier and the target identifier. In addition, the computer device may add the second verification code to the packet for sending together with the packet. FIG. 9 is another diagram of the packet according to an embodiment of this application.

In an implementation of this application, the computer device obtains the second verification code based on the second key and the packet, where the second verification code is used to verify the packet. A measure for verifying the packet is added, and the second verification code is obtained based on the second key. This can further prevent the second verification code from being tampered with or forged, and improve the network security assurance to a greater extent.

In a possible implementation, the first indication information, the second verification code, the association attribute, and the first target information corresponding to the association attribute may be in a packet protocol header field. Optionally, a packet protocol header may be specifically an application layer header, a transport layer header, or a network layer header. Specifically, for example, the first indication information, the second verification code, the association attribute, and the first target information corresponding to the association attribute may be in an extension field or an option header of an internet protocol version 6 (internet protocol version 6, IPv6) or an internet protocol version 6 (internet protocol version 4, IPv4). Alternatively, the first indication information, the second verification code, the association attribute, and the first target information corresponding to the association attribute may be in an option header of a transmission control protocol (transmission control protocol, TCP). It may be understood that the foregoing example is merely used for understanding of embodiments of this application. In an actual situation, the first indication information, the second verification code, the association attribute, and the first target information corresponding to the association attribute may be further at another location of another packet. This is not specifically limited herein.

In a possible implementation, the computer device obtains the association attribute from the first indication information that includes the association attribute; the computer device obtains the association attribute from a second network device; or the computer device obtains the association attribute from second indication information, where the second indication information is information that includes the association attribute and that is of the computer device. Details are described separately below.
Manner 1: The first indication information further includes the association attribute, and the computer device obtains the association attribute from the first indication information.
   The first indication information sent by the first network device to the computer device further includes the association attribute, and the computer device may directly obtain, from the first indication information, the corresponding association attribute when the computer device accesses the target resource. This can improve work efficiency, and ensure that the association attribute is consistent with the association attribute determined in the first network device.
Manner 2: The computer device obtains the association attribute from the second network device.

The computer device obtains the association attribute from the second network device. For example, FIG. 10 is another diagram of an application scenario according to an embodiment of this application. The second network device may be another network device that has the access control policy, for example, a server or a controller, or a network device that has the association attribute corresponding to the computer device. It may be understood that the second network device may alternatively be another network device that can obtain the association attribute. This is not specifically limited herein.

It should be noted that a sequence of step 205 and step 204 is not limited in this implementation of this application.

In this implementation of this application, the computer device obtains the association attribute from the second network device. This can reduce a data amount of the first indication information, and save a network resource.

Manner 3: The computer device obtains the association attribute from the second indication information, where the second indication information is information that includes the association attribute and that is of the computer device.

Optionally, the second indication information may be a preset entry that includes the association attribute corresponding to the computer device or information in another form. It may be understood that the second indication information may include only the association attribute, or may include other information. This is not specifically limited herein.

It should be noted that a sequence of step 205 and step 204 is not limited in this implementation of this application.

In this implementation of this application, the computer device obtains the association attribute from the second indication information of the computer device. This can improve work efficiency, and save a network resource.

206: A third network device receives the packet for accessing the target resource by the computer device.

The third network device receives the packet for accessing the target resource by the computer device, where the packet includes at least the first indication information, the association attribute, and the first target information corresponding to the association attribute, and the first indication information includes at least a first target verification code.

Optionally, the first target verification code may be the first verification code, and the first verification code is obtained by the first network device based on at least the first key, the association attribute, and the first target constraint item corresponding to the association attribute. Alternatively, the first target verification code is a verification code that has been forged or tampered with, and is used to steal the target resource.

Optionally, the third network device receives the packet that is for accessing the target resource and that is sent by the computer device, or the third network device receives the packet that is for accessing the target resource by the computer device and that is forwarded by a fourth network device.

For example, if the third network device is an access layer network device on a computer device side, the third network device directly receives the packet that is for accessing the target resource and that is sent by the computer device; or if the third network device is a core layer network device, the third network device receives the packet that is for accessing the target resource by the computer device and that is forwarded by the fourth network device. It may be understood that, that the third network device is the access layer network device or the core layer network device is merely used as an example, and the third network device may alternatively be another network device in a packet forwarding path. In an actual situation, the third network device is a network device that deploys, based on the actual requirement, the first target verification code for verifying the packet. This is not specifically limited herein.

In a possible implementation, the first network device sends, to the fourth network device, the association attribute and second target information corresponding to the association attribute, where the second target information is preset information corresponding to the association attribute. The fourth network device receives the packet for accessing the target resource by the computer device, where the packet includes at least the first indication information, the association attribute, and the first target information corresponding to the association attribute. Then, the fourth network device obtains the association attribute and the second target information corresponding to the association attribute, and the fourth network device sends the packet when the first target information corresponding to the association attribute is consistent with the second target information corresponding to the association attribute. Then, the third network device that receives the packet performs a subsequent step. The fourth network device discards the packet when the first target information corresponding to the association attribute is inconsistent with the second target information corresponding to the association attribute.

Optionally, the fourth network device obtains, from the first network device, the association attribute and the second target information corresponding to the association attribute, or obtains, from the second network device, the association attribute and the second target information corresponding to the association attribute. Alternatively, the fourth network device may obtain, from another network device that has the association attribute and the second target information corresponding to the association attribute, the association attribute and the second target information corresponding to the association attribute. This is not specifically limited herein. As shown in FIG. 10, the fourth network device obtains, from the first network device, the association attribute and the second target information corresponding to the association attribute. It may be understood that FIG. 10 is merely an example to facilitate understanding of embodiments of this application, and does not constitute a substantial limitation on this application. It should be noted that the second target information may be preset face information, password information, fingerprint information, numeric information, letter information or information about a letter combination, information about a combination of a numeric and a letter, device information, voice information, or the like, or may be other recordable information. This is not specifically limited herein.

Optionally, the fourth network device may be a gateway device (for example, a network device with a packet forwarding capability such as a router, a switch, a firewall, or a hub) or a network device such as an application server.

In an implementation of this application, after receiving the packet for accessing the target resource by the computer device, the fourth network device verifies authenticity of the packet. When the first target information corresponding to the association attribute in the packet is consistent with the second target information corresponding to the association attribute, the fourth network device determines that the packet is authentic and valid, and then sends the packet to the third network device, to continue to verify the packet. However, the fourth network device discards the packet when the first target information corresponding to the association attribute in the packet is inconsistent with the second target information corresponding to the association attribute. This ensures that the packet received by the third network device from the fourth network device is valid. Then, a subsequent packet verification operation is performed, to improve overall work efficiency, and reduce occupation of a network resource.

207: The third network device obtains the first target constraint item corresponding to the association attribute.

The third network device obtains the first target constraint item corresponding to the association attribute.

Optionally, when the first indication information further includes the first target constraint item corresponding to the association attribute, the third network device obtains, from the first indication information, the first target constraint item corresponding to the association attribute. Alternatively, the third network device directly obtains, from the first network device, the first target constraint item corresponding to the association attribute, to be specific, the first target constraint item that is corresponding to the association attribute and that is sent by the first network device to the third network device. In an implementation of this application, a multi-scenario application is provided, and selectivity of this solution is reflected.

In a possible implementation, when the authenticity of the packet received by the third network device is not verified as the authenticity of the packet verified by the fourth network device in step 206, before any one of subsequent step 208, step 209, or step 210, the third network device further obtains the association attribute and the second target information corresponding to the association attribute, where the second target information is the preset information corresponding to the association attribute. Then, when the first target information corresponding to the association attribute is consistent with the second target information corresponding to the association attribute, the third network device determines that the first target information corresponding to the association attribute is valid. Then, the third network device continues to perform a subsequent step. Alternatively, the third network device discards the packet when the first target information of the association attribute is inconsistent with the second target information corresponding to the association attribute.

Optionally, the third network device obtains, from the first network device, the association attribute and the second target information corresponding to the association attribute, to be specific, the association attribute and the second target information corresponding to the association attribute that are sent by the first network device to the third network device. Alternatively, the third network device obtains, from the second network device, the association attribute and the second target information corresponding to the association attribute. It may be understood that the third network device may alternatively obtain, from another network device that has the association attribute and the second target information corresponding to the association attribute, the association attribute and the second target information corresponding to the association attribute. This is not specifically limited herein. A specific implementation is similar to the implementation of the fourth network device in step 206, and details are not described herein again.

In an implementation of this application, the third network device performs a subsequent operation on the packet that is determined as valid based on the first target information corresponding to the association attribute. This can improve work efficiency, and reduce a waste of a network resource.

In a possible implementation, before any one of subsequent step 208, step 209, or step 210, the first indication information further includes the validity period, and the third network device determines, based on the validity period, that the first verification code is valid. When the first verification code is valid, the third network device continues to perform a subsequent step to verify the packet. Alternatively, the third network device discards the packet when the first verification code is invalid.

Optionally, when a time point at which the third network device receives the packet is in the validity period, the third network device determines that the first verification code is valid; when a time point at which the third network device verifies the first verification code based on the validity period is in the validity period, the third network device determines that the first verification code is valid; or when a time point at which the computer device accesses the target resource is in the validity period, the third network device determines that the first verification code is valid. It may be understood that, in an actual situation, it may be verified, based on the validity period and an actual requirement, that the first verification code is valid. This is not specifically limited herein.

In an implementation of this application, the first indication information further includes the validity period. The third network device determines, based on the validity period, that the first verification code is valid. When the first verification code is valid, the third network device performs a subsequent step to verify the packet; or the third network device discards the packet when the first verification code is invalid. This ensures immediacy and validity of the packet, saves a network resource, and prevents the resource from being stolen maliciously.

In a possible implementation, subsequent step 208 and step 209 or step 210 are performed when the first target information corresponding to the association attribute belongs to the first target constraint item corresponding to the association attribute; or step 210 is performed when the first target information corresponding to the association attribute does not belong to the first target constraint item corresponding to the association attribute. Details are described separately below.

Manner 1: When the first target information corresponding to the association attribute belongs to the first target constraint item corresponding to the association attribute:
208: The third network device determines a second target verification code based on at least the first key, the association attribute, and the first target constraint item corresponding to the association attribute.

For example, an association attribute in the packet is the login mode, and a first target constraint item corresponding to the association attribute is [face information, fingerprint information]. When first target information corresponding to the login mode is the face information and is consistent with the face information in the first target constraint item, the third network device determines that the first target information corresponding to the login mode belongs to the first target constraint item corresponding to the login mode, and the third network device determines the second target verification code based on at least the first key, the association attribute, and the first target constraint item corresponding to the association attribute. It may be understood that the example is merely used for understanding of embodiments of this application, and does not constitute a substantial limitation on embodiments of this application.

It should be noted that step 208 is specifically similar to step 203 in which the first network device determines the first verification code based on at least the first key, the association attribute, and the first target constraint item corresponding to the association attribute. Details are not described herein again.

In a possible implementation, the third network device determines the second target verification code based on the source identifier and/or the target identifier and/or the validity period in the packet, the first key, the association attribute, and a second target constraint item corresponding to the association attribute. It should be noted that a specific implementation is similar to the manner described in FIG. 7, and details are not described herein again.

In an implementation of this application, the third network device determines the second target verification code based on the source identifier and/or the target identifier and/or the validity period in the packet, the first key, the association attribute, and the second target constraint item corresponding to the association attribute, and determines the second target verification code based on a plurality of factors. This can improve network security assurance, and improve flexibility and selectivity of this solution.

Optionally, the first key may be preset on the third network device, or may be the first key sent by the first network device. A specific form of the first key is described in detail in the foregoing step 203, and details are not described herein again.

In addition, optionally, before the third network device obtains the first key sent by the first network device, the third network device may establish the secure trusted channel with the first network device in manners such as the transport layer security (transport layer security, TLS) protocol and out-of-band configuration, and then obtain the first key through the secure trusted channel, to prevent the first key from being tampered with or disclosed.

In a possible implementation, the packet shown in FIG. 9 further includes the second verification code, and the third network device further determines a third verification code based on the first indication information and the packet. For example, the third network device first obtains a new key based on the first indication information and the third key, and then the third network device obtains the third verification code based on the new key and the part or all of fixed information in the packet. Details are similar to those described in step 204 and step 205, and the details are not described herein again. It should be noted that the third key may be a shared key preset on the first network device and the third network device, or may be a key randomly derived by the first network device, and is sent to the third network device. It may be understood that, in an actual situation, the third key may be determined based on a requirement. This is not specifically limited herein.

Optionally, step 209 is performed when the first target verification code is the same as the second target verification code; or step 210 is performed when the first target verification code is different from the second target verification code. Details are described separately below.

Manner a: Step 209 is performed when the first target verification code is the same as the second target verification code.

209: The third network device sends the packet.

The third network device sends the packet when the first target verification code is the same as the second target verification code, so that the computer device accesses the target resource.

In a possible implementation, the packet further includes the second verification code. The third network device sends the packet when the first target verification code is the same as the second target verification code, and the second verification code is the same as the third verification code, so that the computer device accesses the target resource.

In an implementation of this application, the third network device sends the packet only when the first target verification code is the same as the second target verification code, and the second verification code is the same as the third verification code, so that the computer device accesses the target resource. This improves network security, prevents a resource from being stolen maliciously to a greater extent, and ensures the network security.

Manner b: Step 210 is performed when the second verification code is different from the third verification code.

210: The third network device discards the packet.

The third network device discards the packet when the first target verification code is different from the second target verification code.

In a possible implementation, the third network device discards the packet when the second verification code is different from the third verification code.

In an implementation of this application, the third network device discards the packet, to prevent the computer device from accessing the target resource, prevent a resource from being stolen maliciously, and save a network resource.

Manner 2: Step 210 is performed when the first target information corresponding to the association attribute does not belong to the first target constraint item corresponding to the association attribute.

210: The third network device discards the packet.

For example, an association attribute in the packet is the login mode. In this case, first target information corresponding to the login mode is the password information, and a first target constraint item corresponding to the login mode is [face information, fingerprint information], so that the first target information corresponding to the login mode does not belong to the corresponding first target constraint item, and the third network device discards the packet. It may be understood that the example is merely used for understanding of embodiments of this application, and does not constitute a substantial limitation on embodiments of this application.

In embodiments of this application, the first network device determines the first verification code based on the first key, the association attribute of the computer device, and the first target constraint item corresponding to the association attribute. The packet that is for accessing the target resource and that is sent by the computer device includes at least the first indication information, the association attribute, and the first target information corresponding to the association attribute, and the third network device verifies the packet based on the first indication information, the association attribute, and the first target information corresponding to the association attribute that are in the packet. The association attribute can be used to monitor a status of the computer device in real time, to prevent, as much as possible, the target resource from being stolen maliciously, improve network security, and reduce application of the ACL during a verification process. In this way, operation and maintenance costs of the ACL are reduced.

To implement functions in the methods provided in the foregoing embodiments of this application, the computer device, the first network device, the second network device, the third network device, and the fourth network device may all include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

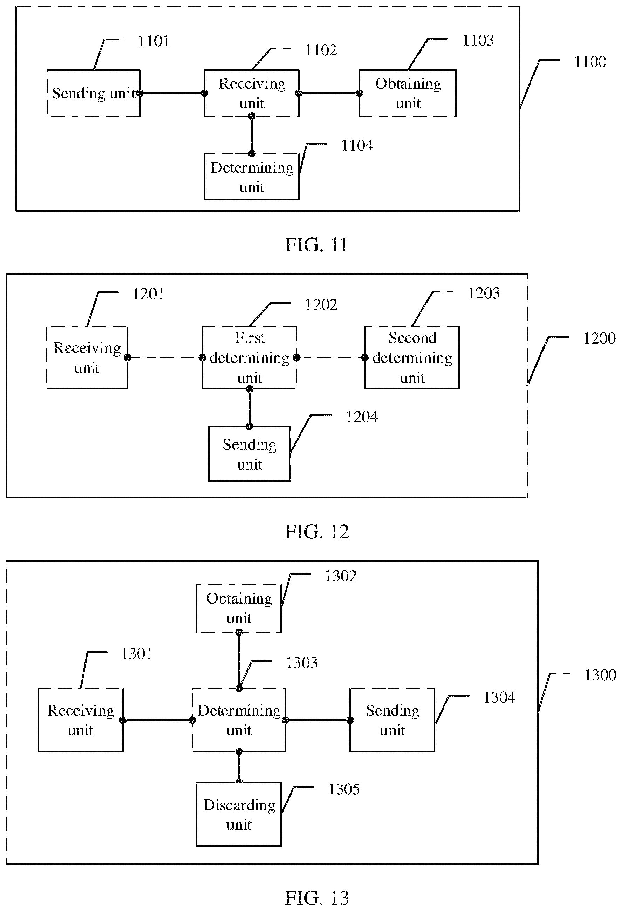

As shown in FIG. 11, an embodiment of this application further provides a computer device 1100. For details, refer to FIG. 11. FIG. 11 is a diagram of a structure of a computer device according to an embodiment of this application. The computer device 1100 may be a terminal device with a communication function. A specific example is shown in the foregoing. Details are not described herein again. In a possible implementation, the computer device 1100 may include modules or units that are in one-to-one correspondence to the methods/operations/steps/actions performed by the computer device in the foregoing method embodiments. The units may be hardware circuits, may be software, or may be implemented by a hardware circuit in combination with software. In a possible implementation, the computer device 1100 may include a sending unit 1101, a receiving unit 1102, an obtaining unit 1103, and a determining unit 1104. The sending unit 1101 may be configured to perform the step of sending the source identifier and the target identifier by the computer device and the step of sending the packet for accessing the target resource in the foregoing method embodiments. The receiving unit 1102 may be configured to perform the step of receiving the first indication information by the computer device in the foregoing method embodiments. The obtaining unit 1103 may be configured to perform the step of obtaining the association attribute by the computer device in the foregoing method embodiments. The determining unit 1104 may be configured to perform the step of determining the first target information corresponding to the association attribute by the computer device in the foregoing method embodiments.

In this embodiment of this application, the sending unit 1101 sends a source identifier and a target identifier to a first network device, and then the receiving unit 1102 receives first indication information sent by the first network device, where the first indication information includes at least a first verification code, the first verification code is determined based on at least a first key, an association attribute, and a first target constraint item corresponding to the association attribute, the association attribute and the first target constraint item corresponding to the association attribute are obtained based on the source identifier, the target identifier, and an access control list. Then, the obtaining unit 1103 obtains the association attribute, the determining unit 1104 determines first target information corresponding to the association attribute, and then the sending unit 1104 sends a packet for accessing a target resource, where the packet includes at least the first indication information, the association attribute, and the first target information corresponding to the association attribute. The packet includes the first indication information, the association attribute, and the first target information corresponding to the association attribute. Therefore, packet verification can ensure immediacy and authenticity of the packet, ensure that the target resource is not stolen maliciously to a greater extent, improve network security, reduce an application of the ACL, and reduce operation and maintenance costs of the ACL.

In another possible design, the sending unit 1101, the receiving unit 1102, the obtaining unit 1103, or the determining unit 1104 may perform, in a one-to-one correspondence manner, the methods/operations/steps/actions in various possible implementations corresponding to the computer device in the foregoing method embodiments. Details are not described herein again. In addition, for beneficial effects of the computer device in other possible designs, refer to the beneficial effects of the various implementations in the method embodiment in FIG. 2 in one-to-one correspondence with beneficial effects of the computer device. Details are not described herein again.

It should be noted that content such as information exchange and an execution process between the modules/units in the computer device in the embodiment corresponding to FIG. 11 is based on a same concept as the method embodiment corresponding to FIG. 2 in this application. For specific content, refer to the descriptions in the foregoing method embodiments of this application. Details are not described herein again.

As shown in FIG. 12, an embodiment of this application further provides a network device 1200. For details, refer to FIG. 12. FIG. 12 is a diagram of a structure of a network device according to an embodiment of this application. The network device 1200 may be a network device such as an application server, a controller, a gateway device, or a personal computer. In a possible implementation, the network device 1200 may include modules or units that are in one-to-one correspondence to the methods/operations/steps/actions performed by the first network device in the foregoing method embodiments. The units may be hardware circuits, may be software, or may be implemented by a hardware circuit in combination with software. In a possible implementation, the network device 1200 may include a receiving unit 1201, a first determining unit 1202, a second determining unit 1203, and a sending unit 1204. The receiving unit 1201 may be configured to perform the step of receiving the source identifier and the target identifier by the first network device in the foregoing method embodiments. The first determining unit 1202 may be configured to perform the step of determining the association attribute and the first target constraint item corresponding to the association attribute by the first network device in the foregoing method embodiments. The second determining unit 1203 may be configured to perform the step of determining the first verification code by the first network device in the foregoing method embodiments. The sending unit 1204 may be configured to perform the step of sending the first indication information that includes at least the first verification code by the first network device in the foregoing method embodiments.

In this embodiment of this application, the receiving unit 1201 receives a source identifier and a target identifier that are sent by a computer device, and then the first determining unit 1202 determines, based on the source identifier and the target identifier according to an access control policy, an association attribute and a first target constraint item corresponding to the association attribute. Then, the second determining unit 1203 determines a first verification code based on at least a first key, the association attribute, and the first target constraint item corresponding to the association attribute, and the sending unit 1204 sends first indication information that includes at least the first verification code to the computer device, to enable the computer device to send, based on the first indication information, a packet for accessing the target resource. The first verification code is determined and obtained based on an association attribute corresponding to the computer device and the first target constraint item corresponding to the association attribute. This reduces a possibility that the first verification code is forged and tampered with, and improves network security assurance. In addition, the packet is verified based on the first verification code, to reduce an application of an ACL, and reduce operation and maintenance costs of the ACL.

In another possible design, the receiving unit 1201, the first determining unit 1202, the second determining unit 1203, or the sending unit 1204 may perform, in a one-to-one correspondence manner, the methods/operations/steps/actions in various possible implementations corresponding to the first network device in the foregoing method embodiments. Details are not described herein again. In addition, for beneficial effects of the network device in other possible designs, refer to the beneficial effects of the various implementations in the method embodiment in FIG. 2 in one-to-one correspondence with beneficial effects of the first network device. Details are not described herein again.

It should be noted that content such as information exchange and an execution process between the modules/units in the network device in the embodiment corresponding to FIG. 12 is based on a same concept as related content of the first network device in the method embodiment corresponding to FIG. 2 in this application. For specific content, refer to the descriptions in the foregoing method embodiments of this application. Details are not described herein again.

As shown in FIG. 13, an embodiment of this application further provides a network device 1300. For details, refer to FIG. 13. FIG. 13 is another diagram of a structure of a network device according to an embodiment of this application. The network device 1300 may be a gateway device (for example, a network device with a packet forwarding capability such as a router, a switch, a firewall, or a hub) or a network device such as an application server. In a possible implementation, the network device 1300 may include modules or units that are in one-to-one correspondence to the methods/operations/steps/actions performed by the third network device in the foregoing method embodiments. The units may be hardware circuits, may be software, or may be implemented by a hardware circuit in combination with software. In a possible implementation, the network device 1300 may include a receiving unit 1301, an obtaining unit 1302, a determining unit 1303, and a sending unit 1304. The receiving unit 1301 may be configured to perform the step of receiving the packet for accessing the target resource by the computer device by the third network device in the foregoing method embodiments. The obtaining unit 1302 may be configured to perform the step of obtaining the first target constraint item corresponding to the association attribute by the third network device in the foregoing method embodiments. The determining unit 1303 may be configured to perform the step of determining the second target verification code by the third network device in the foregoing method embodiments. The sending unit 1304 may be configured to perform the step of sending the packet for accessing the target resource by the third network device in the foregoing method embodiments.

In another possible design, the network device 1300 further includes a discarding unit 1305, and the discarding unit 1305 may be configured to perform the step of discarding the packet by the third network device in the foregoing method embodiments.

In this embodiment of this application, the receiving unit 1301 receives a packet for accessing a target resource by a computer device, and the obtaining unit 1302 obtains a first target constraint item corresponding to an association attribute. When first target information corresponding to the association attribute belongs to the first target constraint item corresponding to the association attribute, the determining unit 1303 determines a second target verification code based on at least a first key, the association attribute, and the first target constraint item corresponding to the association attribute, and the sending unit 1304 sends the packet when a first target verification code is the same as the second target verification code, so that the computer device accesses the target resource. The discarding unit 1305 discards the packet when the first target information corresponding to the association attribute does not belong to the first target constraint item corresponding to the association attribute, or the discarding unit 1305 discards the packet when the first target verification code is different from the second target verification code. The second target verification code is obtained based on the association attribute and the first target information corresponding to the association attribute to verify the packet, so that a status of the computer device can be monitored in real time. This improves network security assurance, prevents a resource from being stolen maliciously as much as possible, avoids verifying the packet based on an ACL, and reduces operation and maintenance costs of the ACL.

In another possible design, the receiving unit 1301, the obtaining unit 1302, the determining unit 1303, the sending unit 1304, or the discarding unit 1305 may perform, in a one-to-one correspondence manner, the methods/operations/steps/actions in various possible implementations corresponding to the third network device in the foregoing method embodiments. Details are not described herein again. In addition, for beneficial effects of the network device in other possible designs, refer to the beneficial effects of the various implementations in the method embodiment in FIG. 2 in one-to-one correspondence with beneficial effects of the third network device. Details are not described herein again.

It should be noted that content such as information exchange and an execution process between the modules/units in the network device in the embodiment corresponding to FIG. 13 is based on a same concept as related content of the third network device in the method embodiment corresponding to FIG. 2 in this application. For specific content, refer to the descriptions in the foregoing method embodiments of this application. Details are not described herein again.

It should be noted that an embodiment of this application further provides a network device. The network device may be a gateway device (for example, a network device with a packet forwarding capability such as a router, a switch, a firewall, or a hub) or a network device such as an application server. The network device can perform the methods/operations/steps/actions in various possible implementations corresponding to the fourth network device in the foregoing method embodiments. Content such as information exchange and an execution process between modules/units in the network device is based on a same concept as related content of the fourth network device in the method embodiment corresponding to FIG. 2 in this application. For specific content, refer to the descriptions in the foregoing method embodiments of this application. Details are not described herein again.

In addition, function modules or units in embodiments of this application may be integrated into one processor, or may exist alone physically, or two or more modules or units may be integrated into one module or unit. The integrated module or unit may be implemented in a form of hardware, or may be implemented in a form of a software function module.

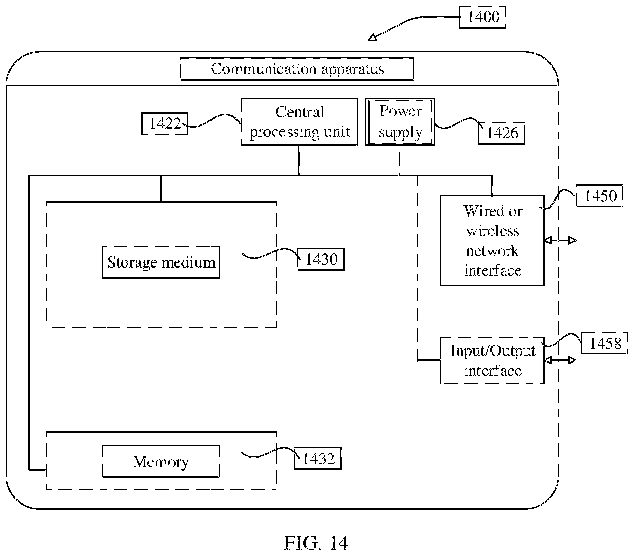

The following describes a communication apparatus provided in an embodiment of this application. FIG. 14 is a diagram of a structure of a communication apparatus according to an embodiment of this application. The modules described in embodiments corresponding to FIG. 11, FIG. 12, or FIG. 13 may be deployed on a communication apparatus 1400, and the communication apparatus 1400 is configured to: implement a function of the computer device in FIG. 11, or a function of the network device in the embodiment corresponding to FIG. 12 or FIG. 13. Specifically, the communication apparatus 1400 is implemented by one or more servers, and the communication apparatus 1400 may be different due to different configurations or performance, and may include one or more central processing units (central processing units, CPU) 1422 (for example, one or more central processing units), a memory 1432, and one or more storage media 1430 (for example, one or more mass storage devices). The memory 1432 and the storage medium 1430 may be transient storage or persistent storage. A program stored in the storage medium 1430 may include one or more modules (not shown in the figure), and each module may include a series of instruction operations in the communication apparatus 1400. Further, the central processing unit 1422 may be configured to communicate with the storage medium 1430, and perform a series of instruction operations in the storage medium 1430 on the communication apparatus 1400.

The communication apparatus 1400 may further include one or more power supplies 1426, one or more wired or wireless network interfaces 1450, and/or one or more input/output interfaces 1458.

In this embodiment of this application, the central processing unit 1422 is configured to perform the method in the embodiment corresponding to FIG. 2. For example, the central processing unit 1422 may be configured to: send a source identifier and a target identifier, receive first indication information that includes at least a first verification code, obtain an association attribute, determine first target information corresponding to the association attribute, and send a packet for accessing a target resource, where the packet includes at least the first indication information, the association attribute, and the first target information corresponding to the association attribute.

Alternatively, the central processing unit 1422 may be configured to: receive a source identifier and a target identifier, determine, based on the source identifier and the target identifier according to the access control policy, an association attribute and a first target constraint item corresponding to the association attribute, determine a first verification code based on the source identifier, the target identifier, the association attribute, and the first target constraint item corresponding to the association attribute, and send first indication information that includes at least the first verification code to the computer device.

Alternatively, the central processing unit 1422 may be configured to: receive a packet for accessing a target resource by a computer device, where the packet includes at least first indication information, an association attribute, and first target information corresponding to the association attribute. Then the central processing unit 1422 obtains a first target constraint item corresponding to the association attribute, and determines a second target constraint item based on the first target constraint item corresponding to the association attribute, the association attribute in the packet, and the first target information corresponding to the association attribute. Then, the central processing unit 1422 determines a second target verification code based on a source identifier, a target identifier, the association attribute, and the second target constraint item corresponding to the association attribute, and sends the packet when a first verification code is the same as the second target verification code.

It should be noted that the central processing unit 1422 may be further configured to perform any step in the method embodiment corresponding to FIG. 2 in this application. For specific content, refer to the descriptions in the foregoing method embodiments shown in this application. Details are not described herein again.

An embodiment of this application further provides a computer-readable storage medium, including computer-readable instructions. When the computer-readable instructions are run on a computer, the computer is enabled to perform any one of the implementations in the foregoing method embodiments.

An embodiment of this application further provides a computer program product, and the computer program product includes a computer program or instructions. When the computer program or instructions are run on a computer, the computer is enabled to perform any one of the implementations in the foregoing method embodiments.

This application further provides a chip or a chip system. The chip may include a processor. The chip may further include a memory (or a storage module) and/or a transceiver (or a communication module); or the chip is coupled to a memory (or a storage module) and/or a transceiver (or a communication module). The transceiver (or the communication module) may be configured to support the chip in performing wired and/or wireless communication. The memory (or the storage module) may be configured to store a program or a group of instructions. The processor invokes the program or the group of instructions to implement an operation performed by a terminal or a network device in the method embodiments or any possible implementation of the method embodiments. The chip system may include the chip, or may include the chip and another discrete component, such as the memory (or the storage module) and/or the transceiver (or the communication module).

This application further provides a communication system. The communication system may include the computer device, the first network device, and the third network device, and may further include the fourth network device. The communication system may be configured to implement an operation performed by the computer device, the first network device, the third network device, or the fourth network device in any one of the foregoing method embodiments and possible implementations of the method embodiments.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all of the modules may be selected based on an actual requirement to achieve an objective of the solutions of embodiments. In addition, in the accompanying drawings of the apparatus embodiments provided in this application, connection relationships between the modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be implemented by a computer program can be easily implemented by using corresponding hardware. In addition, a specific hardware structure for achieving a same function may be of various forms, for example, in a form of an analog circuit, a digital circuit, or a dedicated circuit. However, as for this application, software program implementation is a better implementation in most cases. Based on such an understanding, the technical solutions of this application essentially or a part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a training device, a network device, or the like) to perform the methods described in embodiments of this application.

All or some of the foregoing embodiments may be implemented by using software, hardware, firmware, or any combination thereof. When the software is used for implementation, all or some of embodiments may be implemented in a form of a computer program product.

The computer program product includes one or more computer instructions. When the computer program instructions are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

## Claims

1. An access control method, comprising:
sending, by a computer device, a source identifier and a target identifier to a first network device, wherein the source identifier indicates the computer device, the target identifier indicates a target resource, and the target resource is a resource to be accessed by the computer device;
receiving, by the computer device, first indication information sent by the first network device, wherein the first indication information comprises at least a first verification code, the first verification code is obtained based on at least a first key, an association attribute, and a first target constraint item corresponding to the association attribute, the association attribute is an attribute associated with the source identifier, and the first target constraint item is a preset constraint range of information corresponding to the association attribute;
obtaining, by the computer device, the association attribute, and determining first target information corresponding to the association attribute, wherein the first target information is information corresponding to the association attribute when the computer device accesses the target resource; and
sending, by the computer device, a packet for accessing the target resource, wherein the packet comprises at least the first indication information, the association attribute, and the first target information corresponding to the association attribute.

2. The method according to claim 1, wherein the first indication information further comprises the association attribute, and the obtaining, by the computer device, the association attribute comprises:
obtaining, by the computer device, the association attribute from the first indication information.

3. The method according to claim 1, wherein the obtaining, by the computer device, the association attribute comprises:
obtaining, by the computer device, the association attribute from a second network device.

4. The method according to claim 1, wherein the obtaining, by the computer device, the association attribute comprises:
obtaining, by the computer device, the association attribute from second indication information, wherein the second indication information is information that comprises the association attribute and that is of the computer device.

5. The method according to any one of claims 1 to 4, wherein the method further comprises:
receiving, by the computer device, a second key sent by the first network device, wherein the second key is obtained by the first network device based on the first indication information;
determining, by the computer device, a second verification code based on the second key and the packet; and
sending, by the computer device, the second verification code.

6. The method according to any one of claims 1 to 5, wherein the first indication information further comprises the first target constraint item corresponding to the association attribute and/or a validity period, and the validity period is a validity period of the first verification code.

7. The method according to any one of claims 1 to 6, wherein the association attribute comprises at least any one of the following:
a login mode, behavior abnormality, access relationship abnormality, terminal health, traffic abnormality, a device security level, location information, security group information, or access time.

8. The method according to any one of claims 1 to 7, wherein the source identifier comprises at least any one of the following:
an internet protocol IP address of the computer device, a device identifier of the computer device, a user identity corresponding to the computer device, and a corresponding user group to which the computer device belongs or a source port number corresponding to the computer device.

9. The method according to any one of claims 1 to 8, wherein the target identifier comprises at least any one of the following:
an IP address of the target resource, an IP address prefix of the target resource, a part or all of uniform resource locator URL prefixes of the target resource, a device identifier of the target resource, an identity of the target resource, and a corresponding security group to which the target resource belongs or a port number of the target resource.

10. An access control method, comprising:
receiving, by a first network device, a source identifier and a target identifier that are sent by a computer device, wherein the source identifier indicates the computer device, the target identifier indicates a target resource, and the target resource is a resource to be accessed by the computer device;
determining, by the first network device based on the source identifier and the target identifier according to an access control policy, an association attribute and a first target constraint item corresponding to the association attribute, wherein the access control policy comprises a condition for the computer device to access the target resource, the association attribute is an attribute associated with the source identifier, and the first target constraint item is a preset constraint range of information corresponding to the association attribute;
determining, by the first network device, a first verification code based on at least a first key, the association attribute, and the first target constraint item corresponding to the association attribute; and
sending, by the first network device, first indication information to the computer device, to enable the computer device to send, based on the first indication information, a packet for accessing the target resource, wherein the first indication information comprises at least the first verification code.

11. The method according to claim 10, wherein the determining, by the first network device based on the source identifier and the target identifier according to an access control policy, an association attribute and a first target constraint item corresponding to the association attribute comprises:
determining, by the first network device, an association attribute entry based on the source identifier and the target identifier according to the access control policy, wherein the association attribute entry is an entry that comprises at least the association attribute and the first target constraint item corresponding to the association attribute; and
determining, by the first network device based on the association attribute list, the association attribute and the first target constraint item corresponding to the association attribute.

12. The method according to claim 10 or 11, wherein the method further comprises:
determining, by the first network device, a second key based on the first indication information; and
sending, by the first network device, the second key to the computer device, to enable the computer device to generate a second verification code based on the second key.

13. The method according to any one of claims 10 to 12, wherein the determining, by the first network device, a first verification code based on at least a first key, the association attribute, and the first target constraint item corresponding to the association attribute comprises:
determining, by the first network device, the first verification code based on the source identifier and/or the target identifier and/or a validity period, the first key, the association attribute, and the first target constraint item corresponding to the association attribute, wherein the validity period is a validity period of the first verification code.

14. The method according to any one of claims 10 to 13, wherein the first indication information further comprises at least any one of the following information:
the validity period, the association attribute, or the first target constraint item corresponding to the association attribute.

15. The method according to any one of claims 10 to 14, wherein when the first indication information does not comprise the first target constraint item corresponding to the association attribute, the method further comprises:
sending, by the first network device to a third network device, the first target constraint item corresponding to the association attribute, to enable the third network device to verify, based on the first target constraint item, the packet for accessing the target resource by the computer device.

16. The method according to any one of claims 10 to 15, wherein the method further comprises:
sending, by the first network device to the third network device or a fourth network device, the association attribute and second target information corresponding to the association attribute, to enable the third network device or the fourth network device to verify, based on the association attribute and the second target information corresponding to the association attribute, the packet for accessing the target resource by the computer device, wherein the second target information is preset information corresponding to the association attribute.

17. An access control method, comprising:
receiving, by a third network device, a packet for accessing a target resource by a computer device, wherein the packet comprises at least first indication information, an association attribute, and first target information corresponding to the association attribute, the target resource is a resource to be accessed by the computer device, the first indication information comprises at least a first target verification code, the association attribute is an attribute associated with a source identifier, the first target information is information corresponding to the association attribute when the computer device accesses the target resource, and the source identifier is comprised in the packet;
obtaining, by the third network device, a first target constraint item corresponding to the association attribute, wherein the first target constraint item is a preset constraint range of information corresponding to the association attribute;
when the first target information corresponding to the association attribute belongs to the first target constraint item corresponding to the association attribute, determining, by the third network device, a second target verification code based on at least a first key and the first target constraint item corresponding to the association attribute; and
sending, by the third network device, the packet when the first target verification code is the same as the second target verification code.

18. The method according to claim 17, wherein the method further comprises: discarding, by the third network device, the packet when the first target information corresponding to the association attribute does not belong to the first target constraint item corresponding to the association attribute; and/or
discarding, by the third network device, the packet when the first target verification code is different from the second target verification code.

19. The method according to claim 17 or 18, wherein the first target verification code comprises a first verification code, and the first verification code is obtained based on at least the first key, the association attribute, and the first target constraint item corresponding to the association attribute.

20. The method according to any one of claims 17 to 19, wherein determining, by the third network device, the second target verification code based on at least the first key, the association attribute, and the first target constraint item corresponding to the association attribute comprises:
determining, by the third network device, the second target verification code based on the source identifier and/or a target identifier and/or a validity period, the first key, the association attribute, and the first target constraint item corresponding to the association attribute, wherein the target identifier is comprised in the packet, and the validity period is a validity period of the first target verification code.

21. The method according to any one of claims 17 to 20, wherein the obtaining, by the third network device, a first target constraint item corresponding to the association attribute comprises:
when the first indication information further comprises the first target constraint item corresponding to the association attribute, obtaining, by the third network device from the first indication information, the first target constraint item corresponding to the association attribute; or
obtaining, by the third network device from a first network device, the first target constraint item corresponding to the association attribute.

22. The method according to any one of claims 17 to 21, wherein the first indication information further comprises the validity period, and before the sending, by the third network device, the packet, the method further comprises:
determining, by the third network device based on the validity period, that the first target verification code is valid.

23. The method according to any one of claims 17 and 19 to 22, wherein the packet further comprises a second verification code, and the method further comprises:
determining, by the third network device, a third verification code based on the first indication message and the packet; and
the sending, by the third network device, the packet when the first target verification code is the same as the second target verification code comprises:
sending, by the third network device, the packet when the first target verification code is the same as the second target verification code, and the second verification code is the same as the third verification code.

24. The method according to any one of claims 17 to 23, wherein before the sending, by the third network device, the packet, the method further comprises:
obtaining, by the third network device, the association attribute and second target information corresponding to the association attribute, wherein the second target information is preset information corresponding to the association attribute; and
when the first target information corresponding to the association attribute is consistent with the second target information corresponding to the association attribute, determining, by the third network device, that the first target information corresponding to the association attribute is valid.

25. A communication apparatus, comprising a processor, wherein the processor is coupled to a memory, the memory stores instructions, and the processor is configured to execute the instructions, to enable the communication apparatus to perform the method according to any one of claims 1 to 9.

26. A communication apparatus, comprising a processor, wherein the processor is coupled to a memory, the memory stores instructions, and the processor is configured to execute the instructions, to enable the communication apparatus to perform the method according to any one of claims 10 to 16.

27. A communication apparatus, comprising a processor, wherein the processor is coupled to a memory, the memory stores instructions, and the processor is configured to execute the instructions, to enable the communication apparatus to perform the method according to any one of claims 17 to 24.

28. A computer-readable storage medium, comprising computer-readable instructions, wherein when the computer-readable instructions are run on a computer, the method according to any one of claims 1 to 24 is performed.

29. A computer program product, comprising computer-readable instructions, wherein when the computer-readable instructions are run on a computer, the method according to any one of claims 1 to 24 is performed.
